# DEMANDE DE BREVET EUROPEEN

(11) **EP 0 674 286 A2**
(43) Date de publication de la demande: **27.09.1995**
(21) Numéro de dépôt: 95500005.4
(22) Date de dépôt: 13.01.1995
(51) Int. Cl.: G06F 17/60, G09B 7/02

(54) **Enquêteur électronique de contrôle numérique et temporisateur d'usage par appui**

(30) Priorité: 22.03.1994 ES 9400768
(71) Demandeur: Cintas Santoro, Fernando, E-23700 Linares (Jaén) (ES)
(72) Inventeur: Cintas Santoro, Fernando, E-23700 Linares (Jaén) (ES)

(57) **Abrégé**

L'appareil se compose d'une carcasse rectangulaire. Une grande partie est consacrée au slogan d'information et d'interprétation qui invite le public à son utilisation (AVANT DE PARTIR LAISSEZ VOTRE OPINION AVEC VOTRE COLLABORATION DEMAIN NOUS SERONS MIEUX ou bien AIDEZ-NOUS À VOUS COMPLAIRE).

La partie frontale possède aussi des espacements de dimensions comparées où l'on insère les textes qui doivent être répondus. Les boutons, un de chaque côté avec les options OUI-NON, s'alignent avec chaque panneau des textes. L'action de répondre se réalise grâce à une legère pression tactile qui provoque l'émission d'un bip sonore ou bien d'une signale lumineuse qui indique l'activation de la machine. Cet appui se reflète sur un "DISPLAY" qui registre, en échelle numérique progrésive, la somme d'appuis égale au numéro de réponses. Les OUI obtenus pour chaque texte constituent les aspects que le propriétaire devra respecter dans son commerce. Les NON obtenus refléteront les facteurs qu'il devra modifier ou corriger selon la volonté du public.

Après avoir mis en valeur les réponses données aux questions "êtes-vous content avec les attentions que vous avez reçu?", ou bien, "retournerez-vous de nouveau?", on obtiendra le degré de confiance et de protection dont on jouit devant son public.

Les textes sont interchangeables et ils se nourrent de l'imagination du propriétaire, raison pour laquelle ils sont inépuisables.

L'appareil est aussi pourvu d'un dispositif retardateur ou d'un temporisateur qui se désamorce pendant des secondes après son utilisation pour empêcher des appuis répétés et insistants sur un seul texte.

## Description

### OBJET DE L'INVENTION

L'objet de cette invention est celui d'obtenir du public, comme exprime l'énoncé de cette mémoire descriptive, l'information suffisante pour résoudre de la façon la plus facile les problèmes posés ou la correction de conduites. Les questions posées au préalable seront situées sur les panneaux de la machine, l'émission de l'opinion du public se réalisera par un léger appui tactil et elle s'enresgistrera sur le contrôle numérique qu'elle possède. Les résultats obtenus seront postérieurement analysés. La finalité dernière sera la contribution du client "À L'AMÉLIORATION DES SERVICES".

### ANTÉCÉDENTS DE L'INVENTION

Dans des grands centres commerciaux ou publiques on établit le système d'enquêtes à travers le remplissage de formulaires que dans la plupart des cas sont repoussés par le public dû aux ennuis que cela implique. En même temps ce type d'enquêtes ont l'incovenient qu'elles doivent être manipulées et lues par un personnel qualifié, ce qui exige un temps et des frais qui élevent le prix du système, avec une très baisse participation et acceptation par subir un outrage à ce qui semble un cahier de réclamations.

Parallelèment à ce système il y a les enquêtes d'opinion qui se réalisent avec des sophistiqués systèmes de logiciel qui unis à leur correspondant hardware, rendent ce système prohibitif pour le petit commerce ou pour l'industrie.

### DESCRIPTION DE L'INVENTION

La machine électronique recherche une grande simplification dans la réalisation d'enquêtes d'opinion parce que son emploi et son utilisation sont très simplifiés.

Elle sera normalement située à la sortie de tout endroit, accesible pour faciliter sa manipulation, visuellement localisabale, avec un dessin atractif pour capter l'attention du public et en fin de compte pour qu'elle soit utilisée par lui.

L'enquêteur électronique comportera un group de boutons associés aux correspondantes questions ou options sur lesquelles on a le désire de connaître l'opinion du public afin d'améliorer les services rendus. Les questions ou les textes seront totalement interchangeables ce qui donnera une complète versatilité à l'enquêteur électronique. De cette façon il pourra analyser tant de facteurs positifs que de facteurs négatifs d'un secteur ilimité de l'opinion et dont nous pourrions mentionner quelques exemples:
- Consultation de certains produits qu'une clientèle désire consommer.
- Consultation des prix qu'un certain établissement offre au public.
- Consultation de l'ambiance que le public trouve dans l'endroit.
- Et un long et caetera qui traînerait en longueur.

Les endroits d'utilisation seraient ilimités parce que, quel établissement ne voudrait pas améliorer son service? et quelle meilleure façon de l'améliorer s'il sait ce qui'il doit améliorer grâce à l'opinion de celui qui désire son amélioration: "LE PUBLIC"?.

L'enquêteur électronique possède sur son panneau frontal des phrases qui invitent le client à son utilisation par des appuis sur les boutons situés près de chaque question. Comme mesure de sûreté et pour éviter une réponse répetée par conséquence d'une mauvaise utilisation, ce qui donnerai lieu à une mauvaise intérpretation des résultats, l'enquêteur incorpore un temporisateur de telle sorte qu'une fois qu'on a appuiyé sur un bouton, la machine ne nous permettra pas d'effectuer une seconde opinion à propos du même texte que passés des secondes. Chaque réponse, indépendammet de la question, s'accumulera sur un écran ou compteur numérique situé sur le frontal du panneau et aligné avec le texte correspondant, lequel, selon les particularités d'usage, sera montré au public ou bien il se réservera pour permettre l'accès seulement au propriétaire de l'enquêteur électronique.

En fin de comptes, la machine comptabilise la libre opinion du public à propos des questions preétablies et rédigées par le propriétaire. Les questions s'exposent sur des panneaux. L'opinion du public s'enregistre dans les contrôles numériques en appuiyant sur les ressorts des différentes options. Une fois reflétées les opinions on peut procéder à la lecture numérique et la soumettre à l'analyse correspondant.

La machine comporte des boutons qui s'activent électroniquement quand ils sont pressés avec le doigt de la main, cet appui s'enregistre dans des contrôles numériques progressifs sur lesquels on peut observer le comput numérique égal au numéro de réponses.

Les textes sont interchangeables et tant sa rédaction que sa formulation sont variables et volontaires. Leur contenu dépend de chaque situation spécifique dans laquelle ils s'employeront.

Les milieux d'utilisation sont très vastes: en commerce, en industrie, dans des centres publics ou privés, au gouvernement, pour réaliser des sondages d'opinion, etc.

Son objetif est celui d'améliorer l'industrie et l'attention au client. Le propriétaire, à travers les opinions versées sur la machine, préalablement exposée à la sortie du centre commercial, obtient des réponses du public qui lui rend visite. Ces opinions sont hautement précieuses pour la prise de décision à l'heure d'améliorer ou de corriger les prix, les services, la propreté, la décoration, le degré de confiance.

Jusqu'au point de transformer l'établissement au goût du public, but suprême de tout commerçant. Comme illustration pour le panneau de la machine d'une optique on pourrait poser la question, croyez-vous à notre rigueur scientifique?. Les réponses computées donneraient des mesures correctrices ou de consolidation dans sa propre attitude vers la clientèle.

La machine contient, pour inciter le public à son utilisation, des slogans optionnels sur sa partie extérieure, par exemple, AVANT DE PARTIR LAISSEZ VOTRE OPINION ET DEMAIN NOUS SERONS MIEUX. Ces slogans sont indépendants des textes avec les questions qui se trouvent sur les panneaux avec les boutons.

### DESCRIPTION TECHNIQUE

Pour compléter la description de la machine objet de l'invention vous trouverez ci-joint un dessin schématique qui illustre le fonctionnement de la machine.

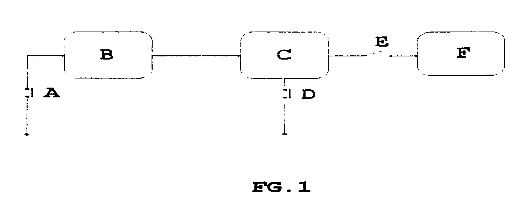

La figure numéro 1 montre le schéma des blocs de l'enquêteur électronique de contrôle numérique et temporisateur d'usage par appui. Dans le détail du dessin on peut observer les différents blocs qui comportent totalement la machine, étant celle-ci composée par tant d'ensembles de blocs que de questions reflétées sur le panneau.
Élément A): Élément d'appui avec lequel s'introduiseront les opinions dans la machine pour sa comptabilité.
Bloc B): Il se compose d'un temporisateur qui évite la répétition d'un appui, c'est à dire, l'appui ne pourra pas être répeté que passés des secondes.
Bloc C): Compteur chargé de sommer les impulsions qui reçoit le bloc B.
Élément D): Bouton chargé de mettre à cero le compteur une fois réalisée la lecture pour que l'enquêteur recommence à nouveau le cycle de comptage.
Élément E): Interrupteur dont l'objet est celui de passer la lecture à l'écran pour qu'elle soit efectuée de façon volontaire et avec l'intention de limiter la lecture à qui correspondra.
Bloc F): Indicateur de sortie ou écran chargé de visualiser les données d'entrée.

## Revendications

1. Enquêteur électronique de contrôle numérique et temporisateur d'usage par appui. Il est constitué par des panneaux avec les textes, rédigés par le propriétaire et interchangeables, où l'on pose au public des questions qu'il repondra librement.
Il se compose de boutons ou de ressorts que le public active en appuiyant pour décider. Cet appui s'enregistre dans un contrôle numérique progressif. La somme des computs peut être observée quantifiée sur le registre numérique et celle ci équivaut à la somme des réponses obtenues. Les textes preétablis et interchangeables sont inépuissables parce qu'ils sont rédigés par son propriétaire, et son contenu dépend de la spécificité de l'endroit où se trouve la machine. Les réponses obtenues sont très précieuses et contribuent à la prise de décision, à la correction ou à la résolution des problèmes avec la collaboration et l'aide de l'opinion sincère du public pour atteindre une meilleure attention.
Il contient aussi des slogans situés sur le frontal de la machine. Leur rédaction est optionnelle et ils dépendent des particularités singulières de l'endroit dans lequel ils seront installés pour provoquer un impact visuel.
Son utilisation es ilimitée étant donné sa propre versatilité. Les modèles peuvent être différents dans sa forme, sa taille et son couleur et adaptés au pouvoir d'achat mais sans modifier le contenu ni les fonctions intrinsèques de l'appareil.
Il est porvu d'un temporisateur qui fait possible un seul appui, car il se désamorce passés des secondes pour empêcher les appuis réitératifs d'une même personne. La machine fonctionne toute seule et elle n'exige pas l'attention du propriétaire ni d'un personnel qualifié.
